# EUROPÄISCHE PATENTSCHRIFT

(11) **EP 2 505 427 B1**
(45) Veröffentlichungstag und Bekanntmachung des Hinweises auf die Patenterteilung: **25.05.2016**
(21) Anmeldenummer: 12159863.5
(22) Anmeldetag: 16.03.2012
(51) Int. Cl.: B60N 2/68

(54) **Fahrzeugsitz mit einer Tragstruktur**
Vehicle seat with supporting structure
Siège de véhicule doté d'une structure porteuse

(30) Priorität: 28.03.2011 DE 102011015364
(43) Veröffentlichungstag der Anmeldung: 03.10.2012
(73) Patentinhaber: GRAMMER AG, 92224 Amberg (DE)
(72) Erfinder: Übelacker, Roland, 92536 Pfreimd (DE); Deml, Johann, 92554 Thanstein (DE); Schustjew, Sergej, 92237 Sulzbach-Rosenberg (DE)
(74) Vertreter: Hannke, Christian

(56) Entgegenhaltungen:
- DE-A1- 19 741 602
- GB-A- 1 166 258
- US-A- 2 118 456
- US-A- 4 993 778

## Beschreibung

Die Erfindung betrifft einen Fahrzeugsitz mit einem Sitzteil, mit einer Rückenlehne und mit einer Tragstruktur zum Tragen des Sitzteils sowie der Rückenlehne, bei welchem die Tragstruktur an einer Karosseriekomponente befestigbar ist und bei welchem mittels der Tragstruktur auf den Fahrzeugsitz einwirkende Kräfte in die Karosseriekomponente einleitbar sind.

Gattungsgemäße Fahrzeugsitze sind aus dem Stand der Technik (z.B. US4993778) bekannt. Speziell in Kraftfahrzeugen oder Nutzkraftfahrzeugen, wie Traktoren oder dergleichen, sind Fahrzeugsitze robuster konstruiert, um härteren Einsatzbedingungen dieser Fahrzeuge gerecht werden zu können. Generell ist jedoch auch bei derartigen Fahrzeugen insgesamt eine Gewichtsreduzierung erwünscht.

Insofern ist es Aufgabe der vorliegenden Erfindung gattungsgemäße Fahrzeugsitze gewichtsreduziert bauen zu können, ohne hierbei komfortrelevante und/oder sicherheitsrelevante Aspekte vernachlässigen zu müssen.

Die Aufgabe der Erfindung wird von einem Fahrzeugsitz mit einem Sitzteil, mit einer Rückenlehne und mit einer Tragstruktur zum Tragen des Sitzteils sowie der Rückenlehne gelöst, bei welchem die Tragstruktur an einer Karosseriekomponente befestigbar ist und bei welchem mittels der Tragstruktur auf den Fahrzeugsitz einwirkende Kräfte in die Karosseriekomponente einleitbar sind, wobei sich der Fahrzeugsitz dadurch auszeichnet, dass die Tragstruktur ein asymmetrisches Gestell mit im Wesentlichen vertikal verlaufenden Hauptkräftestreben aufweist, bei welchem die Hauptkräftestreben oberseitig der Tragstruktur in dem Knotenbereich zusammengeführt und unterseitig der Tragstruktur eine erste der Hauptkräftestreben knotenbereichsseitig als Druckstrebe nach vorne bis zu einem vorderen Tragstrukturfuß, eine zweite der Hauptkräftestreben als Zugstrebe knotenbereichsseitig hinten bis zu einem ersten hinteren Tragstrukturfuß und eine dritte der als Zug-Druckstrebe hinten bis zu einem weiteren hinteren Tragstrukturfuß geführt angeordnet sind.

Durch diese erfindungsgemäße Führung dieser drei Hauptkräftestreben kann die Tragstruktur des Fahrzeugsitzes gewichtsmäßig außergewöhnlich leicht gebaut werden, da im Wesentlichen lediglich die vordere der Hauptkräftestreben besonders stabil ausgelegt werden muss, um insbesondere in einem Crashfall auf den Fahrzeugsitz wirkende Kräfte bewältigen zu müssen.

Vorteilhafter Weise kann aufgrund des erfindungsgemäß ausgestalteten Gestells insbesondere die knotenbereichsseitige hintere Hauptkräftestrebe weniger stabil bauen, so dass sich allein hierdurch bereits eine gute Gewichtsreduzierung am Fahrzeugsitz erzielen lässt.

Darüber hinaus kann auch die dritte Hauptkräftestrebe gegenüber der ersten Hauptkräftestrebe gewichtsreduziert hergestellt werden, da sie ebenso wie die zweite Hauptkräftestrebe insbesondere im Crashfall weniger stark belastet wird als die hier nach vorne geführte Hauptkräftestrebe.

Es versteht sich, dass die Tragstruktur weitere Strukturstreben umfassen kann, die jedoch alle weniger massiv bzw. hochwertig ausgelegt werden müssen als die hier beschriebenen Hauptkräftestreben.

Hinsichtlich einer ersten Ausgestaltung der Erfindung ist es vorteilhaft, wenn die erste Hauptkräftestrebe, insbesondere oberhalb des Sitzteils, bis vor die Rückenlehne reichend angeordnet ist und seitlich an oder neben dem Sitzteil angeordnet ist.

Hierdurch ist es möglich, insbesondere Hauptkräfte aufnehmende und damit besonders relevante Bereiche der Tragstruktur sehr weit in den vorderen Fahrzeugsitzbereich hinein zu verlegen, wodurch eine kräfteoptimierte Abstützung des Fahrzeugsitzes gegenüber der Karosseriekomponente erzielt werden kann.

Kumulativ ist es vorteilhaft, wenn die Tragstruktur Hauptkräftestreben aufweist, bei welchem wenigstens eine der Hauptkräftestreben seitlich an oder neben dem Sitzteil angeordnet ist.

Beide der zuletzt genannten Merkmalskombinationen sind insbesondere auf Seite einer Gurtaufhängung vorteilhaft, da auf dieser Gurtaufhängungsseite Rückhaltekräfte sehr weit oben in die Tragstruktur des vorliegenden Fahrzeugsitzes eingeleitet werden.

Um auch hinsichtlich einer sehr hohen Belastung besonders gut gegen ein unkontrolliertes Ausknicken der Hauptkräftestützen geschützt zu sein, ist es enorm von Vorteil, wenn insbesondere die erste Hauptkräftestreben gebogen und in Sitzrichtung bauchig ausgestaltet ist.

Mit einer gebogenen Hauptkräftestrebe kann vorteilhafter Weise eine definierte Sollknickstelle erzeugt werden.

Insbesondere kann durch ein gezieltes Abspannen gemäß dem Bogenprinzip, die Gefahr eines unkontrollierten Ausknickens in Querrichtung, also quer zur Sitzrichtung einer Person, reduziert werden.

Demzufolge ist es darüber hinaus auch vorteilhaft, wenn die zweite Hauptkräftestrebe in Sitzrichtung bauchig ausgestaltet ist.

Vorteilhafter Weise ist die zweite Hauptkräftestrebe hinter dem Sitzteil angeordnet, wodurch sie speziell vertikal auf den Fahrzeugsitz wirkende Kräfte gut aufnehmen kann.

Die Tragstruktur kann sich vorliegend weiträumig an einem Untergrund abstützen, wenn die dritte Hauptkräftestrebe in Sitzrichtung gesehen quer hinter dem Sitzteil angeordnet ist.

Hierdurch kann der vorliegende Fahrzeugsitz durch das erfindungsgemäße Gestell auch seitlich vorteilhaft abgestützt werden.

Somit lässt sich mittels des vorliegenden asymmetrischen Gestells ein vorteilhaftes Dreibein-Gestell an einem Fahrzeugsitz realisieren, so dass auf eine weitere nach vorne geführte Hauptkräftestrebe verzichtet werden kann.

Beispielsweise wäre diese ausgehend vom oberseitigen Knotenbereich auch nicht zu realisieren, da zwischen dem Knotenbereich und einem gegenüberliegenden vorderen weiteren Tragstrukturfuß des Fahrzeugsitzes das Sitzteil mit dem Sitzbereich angeordnet ist.

Eine bevorzugte Ausführungsvariante sieht des Weiteren vor, dass die dritte Hauptkräftestrebe fußbereichsseitig an einer Dreiecks-Anordnung aus weiteren Tragstrukturstreben abgestützt angeordnet ist.

Mittels dieser Dreiecks-Anordnung kann eine erste wichtige weitere Tragstrukturstrebenverteilung an dem asymmetrischen Gestell erzielt werden.

Um die Tragstruktur darüber hinaus weiter gewichtsreduziert ausgestalten zu können, ist es außergewöhnlich vorteilhaft, wenn eine vorderseitige Vertikalstrebe der Dreiecks-Anordnung von dem weiteren hinteren Tragstrukturfuß hochwärts nach vorne ausgerichtet angeordnet ist und insbesondere eine Horizontalstrebe der Dreiecks-Anordnung trägt.

Kumulativ ist es vorteilhaft, wenn eine Horizontalstrebe der Dreiecks-Anordnung sich von einer rückseitigen Vertikalstrebe der Dreiecks-Anordnung bis zu einem weiteren Tragstrukturfuß der Tragstruktur erstreckt.

Durch letzteres kann eine sehr günstige Stabilisierung der Tragstruktur erreicht werden.

Insbesondere kann sich eine vordere Abstützeinrichtung des Sitzteils neben einer Abstützung auf der ersten Hauptkräftestrebe zusätzlich auf diese Horizontalstrebe abstützen.

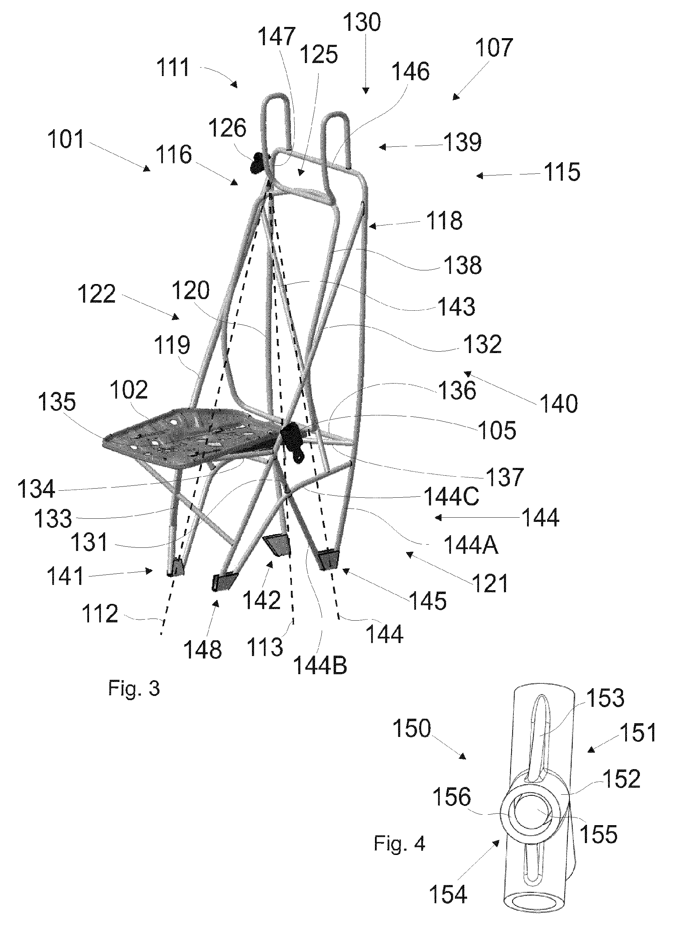

Weitere vorteilhafte Tragstrukturstrebenverläufe werden insbesondere hinsichtlich des in der Figur 3 gezeigten Ausführungsbeispiels und des in der Figur 4 gezeigten weiteren Ausführungsbeispiels beschrieben.

Um die Gefahr eines Ausknickens insbesondere der vorderen Hauptkräftestrebe weiter reduzieren zu können, ist es vorteilhaft, wenn die drei Hauptkräftestreben zusätzlich mittels einer Dreiecksverbindung direkt miteinander verbunden sind. Hierdurch können an der Tragstruktur auftretende Kräfte vorteilhafter zwischen den einzelnen Hauptkräftestreben aufgeteilt werden.

Es versteht sich, dass eine derartige Dreiecksverbindung vielfältiger Gestalt sein kann. Bevorzugt werden ein Dreiecksknotenblech vorzugsweise in Gestalt eines Dreiecksblechrahmens oder eine Dreieckskonstruktion aus Einzelstäben.

Wird die Dreiecksverbindung unterhalb des Knotenbereichs vorgesehen, kann speziell die druckbelastete, freie Länge der Hauptkräftestreben vorteilhaft reduziert werden.

Insofern ist es vorteilhaft, wenn die Dreiecksverbindung in einem Bereich vorgesehen ist, der sich noch oberhalb des Sitzteils und/oder noch hinter der Rücklehne des Fahrzeugsitzes befindet.

Die Aufgabe der Erfindung wird auch von einem hier nicht beanspruchten Fahrzeugsitz mit einem Sitzteil, mit einer Rückenlehne und mit einer Tragstruktur zum Tragen des Sitzteils sowie der Rückenlehne gelöst, bei welchem die Tragstruktur an einer Karosseriekomponente befestigbar ist und bei welchem mittels der Tragstruktur auf den Fahrzeugsitz einwirkende Kräfte in die Karosseriekomponente einleitbar sind, wobei sich der Fahrzeugsitz dadurch auszeichnet, dass die Tragstruktur eine Hauptkräfte-Leiteinrichtung mit im Wesentlichen vertikal verlaufenden Hauptkräftestreben und mit im Wesentlichen vertikal verlaufenden Hauptkräftewirklinien aufweist, bei welcher die im Wesentlichen vertikal verlaufenden Hauptkräftewirklinien oberseitig der Tragstruktur in einem Knotenbereich der Hauptkräfte-Leiteinrichtung zusammenlaufend angeordnet und unterseitig der Tragstruktur weiter voneinander beabstandet angeordnet sind als in dem Knotenbereich.

Dadurch, dass die Tragstruktur eine Hauptkräfte-Leiteinrichtung mit einem derartigen Hauptkräftewirklinienverlauf aufweist, kann die Tragstruktur bereichsweise auf tatsächlich auftretende Belastungen ausgelegt und somit bedarfsgerechter konstruiert werden, wodurch der Fahrzeugsitz insgesamt gewichtsreduzierter gebaut werden kann.

Darüber hinaus wird auch eine weite räumliche Trennung von Zug- und Druckspannungen erzielt, so dass im Wesentlichen lediglich Zug- und Druckkräfte als auftretende Hauptkräfte von der Tragstruktur bewältigt werden müssen. Kritische Kraftkonzentrationen bzw. nachteilige Momente können vorteilhafter Weise auf ein zu vernachlässigendes Maß reduziert werden.

Mit dem Begriff "Hauptkräfte-Leiteinrichtung" ist jegliche Einrichtung erfasst, mittels welcher auf den Fahrzeugsitz wirkende Kräfte in die Karosseriekomponente eines Fahrzeugs eingeleitet werden können.

Es versteht sich, dass die Hauptkräfte-Leiteinrichtung sowohl mittels waagerecht oder senkrecht verlaufender als auch mittels dazwischen orientierter Strukturstreben aufgebaut sein kann, solange die vorgesehenen Strukturstreben im wesentlich vertikal verlaufende Hauptkräftewirklinien bezüglich der Tragstruktur realisierbar machen.

Eine derart konzipierte Tragstruktur erlaubt es darüber hinaus, dass das vorgesehene Sitzteil und die vorgesehene Rückenlehne im Wesentlichen nur den Kräfteanforderungen einer in dem vorliegenden Fahrzeugsitz sitzenden Person genügen muss, wodurch sich der Fahrzeugsitz vorteilhafter Weise weiter gewichtsreduziert verwirklichen lässt.

Die Begriffe "oberseitig" und unterseitig" beschreiben im Sinne der Erfindung Bereiche sowohl des Fahrzeugsitzes bzw. der diesbezüglichen Tragstruktur als auch außerhalb des Fahrzeugsitzes bzw. der Tragstruktur hiervon.

Das bedeutet vorliegend, dass sich die im Wesentlichen vertikal verlaufenden Hauptkräftewirklinien auch außerhalb einer physikalischen Struktur des Fahrzeugsitzes treffen bzw. bündeln können.

Vorzugsweise ist der Knotenbereich im oberen Drittel der Tragstruktur bzw. des Fahrzeugsitzes angeordnet, so dass die Tragstruktur dort möglichst schlank bauen kann.

Idealerweise umfasst der Knotenbereich einen Eckbereich der Tragstruktur bzw. des Fahrzeugsitzes, so dass der Eckbereich konstruktiv unmittelbar von dem Knotenbereich selbst ausgestaltet sein kann. Hierdurch kann eine weitere Gewichtsreduzierung erzielt werden.

Sind insbesondere die im Wesentlichen vertikal verlaufenden Hauptkräftewirklinien unterseitig der Tragstruktur weiter voneinander beabstandet angeordnet als oberseitig der Tragstruktur, ergibt sich ein asymmetrischer Hauptkräfteverlauf hinsichtlich der Tragstruktur, wodurch Strukturstreben von weniger belasteten Bereichen der Tragstruktur entsprechend gewichtsreduzierter ausgestaltet sein können.

Darüber hinaus kann eine Kräfteeinleitung in die Karosseriekomponente als weniger belastend insbesondere für die Karosseriekomponente ausgestaltet werden, wenn die im Wesentlichen vertikal verlaufenden Hauptkräftewirklinien an der der Karosseriekomponente zugewandten Seite des Fahrzeugsitzes weiter voneinander beabstandet angeordnet sind.

Hierdurch kann insbesondere auch ein vorteilhaftes Kräftedreieck an der vorliegenden Tragstruktur bereitgestellt werden, wobei ein derartiges Kräftedreieck eine besonders gute Möglichkeit darstellt, auf den Fahrzeugsitz wirkende Kräfte in die Karosseriekomponente einzuleiten.

Eine diesbezügliche Karosseriekomponente kann hierbei beispielsweise als ein Kabinen- bzw. Fahrgastzellenboden eines Fahrzeugs formuliert sein.

Eine weitere bevorzugte Ausführungsvariante sieht vor, dass die Hauptkräfte-Leiteinrichtung ein asymmetrisch ausgestaltetes Gestell umfasst, in welchem die im Wesentlichen vertikal verlaufenden Hauptkräftewirklinien oberseitig der Tragstruktur näher zusammengeführt angeordnet sind als unterseitig der Tragstruktur.

Durch ein derart asymmetrisch ausgestaltetes Gestell kann die Hauptkräfte-Leiteinrichtung besonders gut bedarfsgerecht hinsichtlich wirkender Kräfte konstruiert werden.

Insofern kann die erforderliche Tragstruktur des Fahrzeugsitzes konstruktiv besonders einfach umgesetzt werden, wenn die Hauptkräfte-Leiteinrichtung ein Gestell mit Hauptkräftestreben aufweist, bei welchem die Hauptkräftestreben oberseitig der Tragstruktur in dem Knotenbereich zusammengeführt und unterseitig der Tragstruktur weiter voneinander beabstandet angeordnet sind als im Knotenbereich.

Es versteht sich, dass die Hauptkräfte-Leiteinrichtung physikalisch in verschiedenen Bauweisen realisiert werden kann. Konstruktiv außergewöhnlich einfach kann die Hauptkräfte-Leiteinrichtung mit einem Dreibein-Gestell realisiert werden.

Vorzugsweise laufen durch das Dreibein-Gestell definierte Strukturstreben der Hauptkräfte-Leiteinrichtung im Knotenbereich der Tragstruktur zusammen.

Insofern ist leicht erkennbar, dass mittels des Dreibein-Gestells baulich einfach die im Wesentlichen vertikal verlaufenden Hauptkräftewirklinien oberseitig der Tragstruktur zusammenlaufend und unterseitig der Tragstruktur auseinanderlaufend orientiert werden können.

Eine besonders bevorzugte Ausführungsvariante sieht vor, dass der Knotenbereich eine Halteeinrichtung für eine Gurtaufhängung umfasst.

Die Gurtaufhängung ist hierbei im Wesentlichen eine Komponente eines Gurtrückhaltesystems, welches vorzugsweise vollständig in dem Fahrzeugsitz integriert ist, wobei die Gurtaufhängung des Knotenbereichs ein Gurtmagazin oder Gurtumlenkung umfassen kann.

Insofern können im Falle einer Gurtrückhaltesystemaktivierung auf die Gurtaufhängung wirkende Rückhaltekräfte hinsichtlich einer im Fahrzeugsitz sitzenden Person unter Umgehung der Rückenlehne vorteilhafter Weise direkt in die Tragstruktur und weiter in die Karosseriekomponente eingeleitet werden.

Hierdurch kann insbesondere eine weitere Gewichtsreduzierung an dem vorliegenden Fahrzeugsitz erzielt werden.

Insbesondere das Dreibein-Gestell mit seinem oberen Knotenbereich eignet sich zur Aufnahme der Gurtaufhängung besonders gut, da Rückhaltekräfte über das Dreibein-Gestell weiträumig in die Karosseriekomponente eingeleitet werden können.

Bei herkömmlichen Fahrzeugsitzen mit integrierter Gurtaufhängung verhält es sich in der Regel so, dass solche Rückhaltekräfte zuerst auf eine Rückenlehnenstruktur wirken bevor sie gegebenenfalls über eine Tragstruktur in eine Karosseriekomponente eingeleitet werden können. Meist ist hierbei noch eine Umlenkung der Rückhaltekräfte über einen Neigungswinkelverstellmechanismus zwischen der Rückenlehne und einem Sitzteil erforderlich.

Vorteilhafter Weise kann vorliegend hierauf verzichtet werden. Insofern bilden die Merkmale hinsichtlich der vorliegenden Gurtaufhängung herkömmliche Fahrzeugsitze auch ohne die übrigen Merkmale der Erfindung vorteilhaft weiter.

Es versteht sich, dass die Strukturstreben und insbesondere die Hauptkräftestreben der Tragstruktur vielfältig konzipiert sein können.

Insofern sei an dieser Stelle angemerkt, dass es ebenfalls besonders vorteilhaft ist, wenn die Hauptkräfte-Leiteinrichtung ein Gestell mit Hauptkräftestreben aufweist, bei welchem insbesondere die Hauptkräftestreben unterschiedliche Querschnittsprofile aufweisen.

So können die Hauptkräftestreben beispielsweise ein Ovalrohr-Profil oder ein offenes C-Profil oder dergleichen aufweisen.

Um die Tragstruktur weiter vorteilhaft an die unterschiedlichen Aufgabenbereiche anpassen zu können, ist es vorteilhaft, wenn eine erste Hauptkräftestrebe der Hauptkräfte-Leiteinrichtung im Wesentlichen als Druckstab, eine zweite Hauptkräftestrebe im Wesentlichen als Zugstab und/oder eine dritte Hauptkräftestrebe im Wesentlichen als Zug-Druckstab ausgestaltet sind.

Vorzugsweise ist die erste bzw. die vordere Hauptkräftestrebe, in Sitzrichtung gesehen, als Druckstab ausgelegt, da sie hauptsächlich auf Druck beansprucht wird, insbesondere bei einer Gurtrückhaltesystemaktivierung.

Die gurtaufhängungsseitige Hauptkräftestrebe ist vorzugsweise stärker dimensioniert als die übrigen Strukturstreben.

Darüber hinaus kann durch ein gezieltes Abspannen gemäß dem Bogenprinzip, die Gefahr eines unkontrollierten Ausknickens in Querrichtung, also quer zur Sitzrichtung einer Person, reduziert werden.

Insofern ist es vorteilhaft, wenn die vordere Hauptkräftestrebe gegenüber den anderen Strukturstreben hinsichtlich des Materials und/oder des Profils höherwertig gewählt ist, um auch die Gefahr eines Ausknickens zu reduzieren bzw. zur Gänze zu vermeiden. Hierbei eignet sich insbesondere ein Ovalrohr oder auch ein hydrogeformtes Rohr.

Allgemein sind hinsichtlich der Strukturstreben bevorzugt Rohrstärken von 10 mm bis 30 mm und Rohrwandstärken von 0,8 mm bis 3 mm zu empfehlen, wobei zusätzlich auch noch zwischen Druck- und Zug-Rohren unterschieden werden kann, um eine verbesserte Gewichtsreduzierung zu erzielen.

Darüber hinaus können auch Vollmassiv-Zugstäbe mit einem Durchmesser von 2 mm bis 8 mm zum Einsatz kommen, um eine Kraftverteilung an der Tragstruktur weiter zu verbessern.

Beispielsweise hinsichtlich des vorstehend erläuterten Dreibein-Gestells ist es vorteilhaft, wenn ein Stahl in der Materialgüte S 355 oder Qst 420 verwendet wird, wobei zumindest die gurtseitige vordere Hauptkräftestrebe idealweiseweise einen Durchmesser von 20 mm bis 35 mm und eine Wandstärke von 0,8 mm bis 3 mm aufweist.

Hinsichtlich einer Edelstahl-Ausführung können die Werte bei 21,3 mm bezüglich des Durchmessers und von 1 mm bis 2 mm bezüglich der Wandstärke liegen.

Bei einem hochfesten Dualphasenstahl DP600/DP800 mit einer Streckgrenze von 550 MPa bis 800 MPa werden Durchmesser von 10 mm bis 22 mm und Wandstärken von 0,8 mm bis 2 mm bevorzugt eingesetzt.

Bei einem hochfesten Aluminium mit einer Streckgrenze von 260 MPa bis 360 MPa sind die Werte vorzugsweise mit 22 mm bis 35 mm hinsichtlich des Durchmessers und 1 mm bis 3 mm hinsichtlich der Wandstärke wieder etwas größer gewählt.

Am Fahrzeugsitz querlaufende Strukturstreben, wie etwa die vorstehend erwähnte dritte, diagonal verlaufende Hauptkräftestrebe, sind idealerweise als Zug-Druckstab vorgesehen und können insbesondere hinsichtlich des Durchmessers, der Materialgüte, der Materialstärke und/oder der Profilierung etwas weniger hochwertig ausgelegt sein.

Die vorstehend beschriebene zweite Hauptkräftestrebe, welche im Wesentlichen einen Zugstab realisiert, kann noch weniger aufwändig ausgelegt werden, da bei dieser eine Gefahr eines Ausknickens kaum besteht.

Ein Herstellungsprozess der vorliegenden Tragstruktur bzw. der Hauptkräfte-Leiteinrichtung kann vorteilhaft gestaltet werden, wenn die Tragstruktur eine Vielzahl an Strukturstreben und wenigstens eine Verbindungseinrichtung hierfür aufweist, wobei die Verbindungseinrichtung wenigstens einen Aufnahmeraum für eine der Strukturstreben umfasst und wobei in den Aufnahmeraum ein stehender Verbindungsdorn hineinragend angeordnet ist.

Vorteilhaft bei dieser Konstruktionsart ist die besonders innige Verbindungsmöglichkeit der Verbindungseinrichtung mit der jeweiligen Strukturstrebe, insbesondere im Gegensatz zu Verbindungseinrichtungen mit einfachen Durchgangslöchern. Insofern stellt die Verbindungseinrichtung vorteilhafte Muffen zum Verbinden der Strukturstreben zur Verfügung.

Vorzugsweise ist der stehende Verbindungsdorn etwas hinter der Ebene der Aufnahmeraumöffnung zurückgesetzt, so dass Material eingespart werden kann.

Der Verbindungsdorn kann hierbei einen Hohldorn umfassen, so dass auch hier Gewicht eingespart werden kann.

Eine diesbezüglich bevorzugte Ausführungsvariante sieht vor, dass der Aufnahmeraum einen Ringzylinder ausgestaltet. Hierdurch kann eine besonders innige Verbindung zwischen der Verbindungseinrichtung und einer der Strukturstreben erzeugt werden.

Wird der Ringzylinder vor dem Einstecken einer Strukturstrebe mit einem Kleber aufgefüllt, kann der Kleber nach dem Verdrängungsprinzip beispielsweise ein Rohr der Strukturstrebe innen und außen idealerweise gleichmäßig umhüllen, wodurch die Klebefläche um etwa das Doppelte vergrößert werden kann. Durch diese Konstruktion kann die erforderliche Einstecktiefe bzw. eine diesbezügliche Länge der Verbindungseinrichtung etwa um die Hälfte reduziert werden.

Da insbesondere durch hier vorgeschlagene Verbindungseinrichtung ebenfalls eine weitere Gewichtsreduzierung erzielt werden kann, sind die Merkmale im Zusammenhang mit der Verbindungseinrichtung auch ohne die übrigen Merkmale der Erfindung vorteilhaft.

Umfasst des Weiteren der Knotenbereich einen Knotenfitting zum Verbinden insbesondere von Hauptkräftestreben der Hauptkräfte-Leiteinrichtung, wobei der Knotenfitting wenigstens eine Aufnahme mit einem Innenraum zum Anordnen eines Hauptkräftestrebenendes und einen in dem Innenraum hineinragenden Verbindungsdorn aufweist, kann insbesondere der Knotenbereich der vorliegenden Tragstruktur bzw. der Hauptkräfte-Leiteinrichtung vorteilhaft weitergebildet werden, da auch hier die Vorteile der vorstehend beschriebenen Verbindungseinrichtung zutreffen.

Die Tragstruktur und insbesondere die Hauptkräfte-Leiteinrichtung können demnach vielfältig gestaltet sein.

Praktisch umgesetzt werden können die einzelnen Varianten beispielsweise, indem entsprechende Rohre, Stäbe und/oder Profile, vorzugsweise aus Edelstahl, unter Zuhilfenahme von Knotenblechen miteinander verschweißt werden.

Eine alternative Fertigungsmöglichkeit sieht vor, dass die Rohre, Stäbe und/oder Profile, vorzugsweise aus Edelstahl, mit Knotenblechen und/oder Steckverbindern aus Kunststoff oder Aluminium verschweißt bzw. verklebt werden.

Hinsichtlich einer weiteren Fertigungsmöglichkeit ist vorgeschlagen, Rohre, Stäbe und/oder Profile aus hochfestem Stahl, wie beispielsweise Dualphasenstahl oder TRIP-Stahl, mit Hilfe von Knotenbleche und Steckverbindern zu verschweißen und/oder zu verkleben.

Darüber hinaus ist es möglich, die einzelnen Strukturstreben der Tragstruktur bzw. der Hauptkräfte-Leiteinrichtung spritztechnisch zu verbinden, indem die jeweiligen Rohre, Stäbe und/oder Profile etwa in ein Kunststoff-Spritzwerkzeug eingelegt und hierbei Verbindungsknoten thermoplastisch angespritzt werden.

Auch können Alu-Strangpressprofile mit Rohrverbindern aus Alu-Druckguss oder aus Kunststoff, GFK-CFK, verklebt werden.

Insbesondere durch Hydroverformung können die Strukturstreben hinsichtlich Materialdurchmesser, Wandstärken und/oder Geometrien im Hinblick auf unterschiedliche Anforderungen vielseitig gestaltet werden.

Durch Anbringen weiterer Strukturstreben kann die hier beschriebene Tragstruktur hinsichtlich weiterer Bauteile bzw. Bauteilgruppen, wie etwa Armlehnen, einem Tisch oder dergleichen, bedarfsgerecht und zielgerichtet ergänzt werden.

An dieser Stelle sei noch erwähnt, dass die Aufgabe der Erfindung auch von einem Fahrzeug, von einem Kraftfahrzeug oder von einem Nutzkraftfahrzeug gelöst wird, welches sich durch einen erfindungsgemäßen Fahrzeugsitz nach einem der hier beschriebenen Merkmale auszeichnet.

Es versteht sich, dass die Merkmale der vorstehend bzw. in den Ansprüchen beschriebenen Lösungen gegebenenfalls auch kombiniert werden können, um die Vorteile entsprechend kumuliert umsetzen zu können.

Weitere Vorteile, Ziele und Eigenschaften vorliegender Erfindung werden anhand anliegender Zeichnung und nachfolgender Beschreibung erläutert, in welchen beispielhaft Fahrzeugsitze mit einer Tragstruktur umfassend eine Hauptkräfte-Leiteinrichtung mit im Wesentlichen vertikal verlaufenden Hauptkräftewirklinien dargestellt und beschrieben sind.

In der Zeichnung zeigen:
- Figur 1: schematisch eine perspektivische Ansicht eines Nutzkraftfahrzeugsitzes mit einer einfachen Tragstruktur umfassend eine Hauptkräfte-Leiteinrichtung mit einem Dreibein-Gestell;
- Figur 2: schematisch eine idealisierte Darstellung des Dreibein-Gestells aus der Figur 1;
- Figur 3: schematisch eine perspektivische Ansicht einer anderen Tragstruktur eines Kraftfahrzeugsitzes umfassend ein asymmetrisches Gestell mit mehr als einer gebogenen Hauptkräftestrebe;
- Figur 4: schematisch eine Ansicht einer Verbindungseinrichtung mit einem Knotenfitting umfassend vier Aufnahmen für Strukturstreben einer Hauptkräfte-Leiteinrichtung;
- Figur 5: schematisch eine Ansicht einer Tragstruktur mit der Verbindungseinrichtung aus der Figur 4 mit zusätzlichen dünnen Stabilisierungsstreben;
- Figur 6: schematisch eine Ansicht einer weiteren Tragstruktur mit einer alternativen Verbindungseinrichtung;
- Figur 7: schematisch eine perspektivische Ansicht einer weiteren KraftfahrzeugsitzTragstruktur mit einer Dreiecksverbindung zwischen Hauptkräftestreben; und
- Figur 8: schematisch eine Detailansicht der Dreiecksverbindung aus der Figur 7.

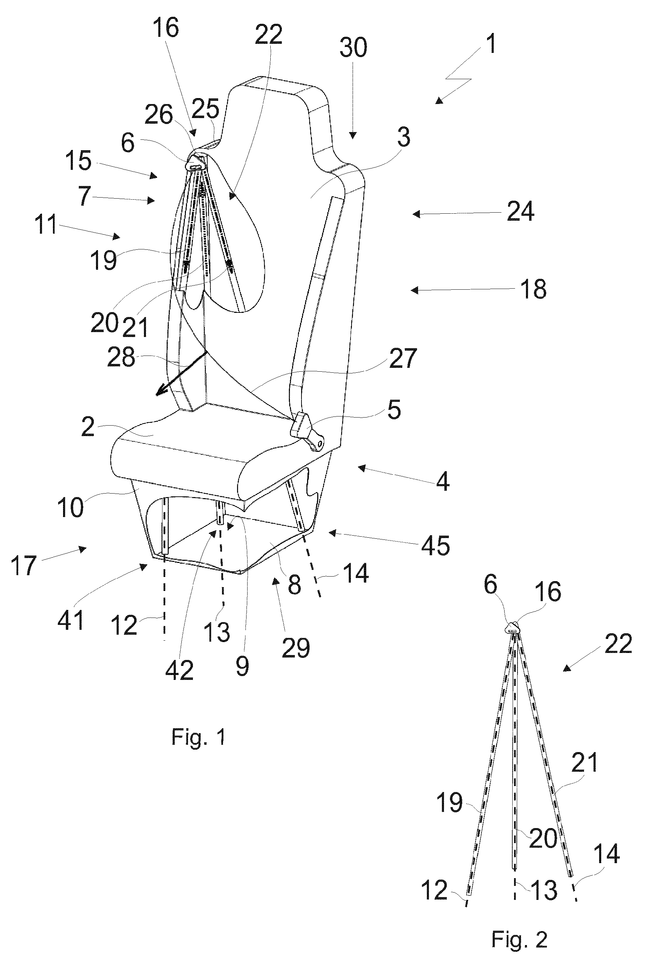

Der in der Figur 1 gezeigte Fahrzeugsitz 1 umfasst ein Sitzteil 2, eine Rückenlehne 3 und ein integriertes Gurtrückhaltesystem 4 - hier illustriert durch ein Gurtschloss 5 und einer Gurtumlenkeinrichtung 6 - zum Zurückhalten einer auf dem Fahrzeugsitz 1 sitzenden Person (hier nicht eingezeichnet).

Der Fahrzeugsitz 1 zeichnet sich durch eine Tragstruktur 7 aus, welche einerseits das Sitzteil 2 und die Rückenlehne 3 trägt.

Andererseits kann der gesamte Fahrzeugsitz 1 mittels der Tragstruktur 7 an einer Karosseriekomponente 8 eines hier nicht näher gezeigten Nutzkraftfahrzeugs befestigt werden. Bei dem Nutzkraftfahrzeug handelt es sich in diesem Ausführungsbeispiel um einen Traktor, wobei die Karosseriekomponente 8 ein Kabinenboden 9 ist. Unterhalb des Sitzteils 2 ist der Fahrzeugsitz 1 noch mit einem Blechkleid 10 verblendet.

Die Tragstruktur 7 weist erfindungsgemäß eine Hauptkräfte-Leiteinrichtung 11 mit in diesem Ausführungsbeispiel drei im Wesentlichen vertikal verlaufenden Hauptkräftewirklinien 12, 13 und 14 auf, mittels welcher auf den Fahrzeugsitz 1 einwirkende relevante Kräfte als Hauptkräfte in die Karosseriekomponente 8 eingeleitet werden können.

Die Hauptkräfte-Leiteinrichtung 11 ist hierbei derart ausgestaltet, dass die drei Hauptkräftewirklinien 12, 13 und 14 oberseitig 15 an der Tragstruktur 7 in einem gemeinsamen Knotenbereich 16 zusammenlaufen, wodurch die Hauptkräfte-Leiteinrichtung 11 sehr kompakt baut.

Dahingegen sind die drei Hauptkräftewirklinien 12, 13 und 14 unterseitig 17 an der Tragstruktur 7 weiter voneinander beabstandet als im Knotenbereich 16, so dass die an dem Fahrzeugsitz 1 auftretenden Hauptkräfte vorteilhafter Weise großflächig in die Karosseriekomponente 8 eingeleitet werden können.

Vorteilhafter Weise weist die Hauptkräfte-Leiteinrichtung 11 ein asymmetrisches Gestell 18 auf, welches gewichtsreduziert lediglich durch eine erste Hauptkräftestrebe 19, eine zweite Hauptkräftestrebe 20 und eine dritte Hauptkräftestrebe 21 realisiert ist.

Insofern ist die Hauptkräfte-Leiteinrichtung 11 in diesem Ausführungsbeispiel im Wesentlichen durch ein einfach konstruiertes Dreibein-Gestell 22 geschaffen, welches trotz des einfachen und gewichtsmäßig leichten Aufbaus eine sehr stabile Tragstruktur 7 gewährleistet.

Die erste Hauptkräftestrebe 19 ist als im Wesentlichen reine Druckstrebe ausgelegt, die in diesem Ausführungsbeispiel zudem noch gebogen ausgeformt ist.

Insofern verläuft die erste Hauptkräftewirklinie 12 zumindest teilweise außerhalb der ersten Hauptkräftestrebe 19.

Die erste Hauptkräftestrebe 19 ragt hierbei insbesondere oberhalb des Sitzteils 2 bis vor die Rückenlehne 3 in den Sitzbereich 23 des Fahrzeugsitzes 1 bauchig hinein.

Vorteilhafter Weise ist die erste Hauptkräftestrebe 19 als vordere der Hauptkräftestreben 19, 20 und 21 in einer Seitenführungseinrichtung des Fahrzeugsitzes 1 eingebettet.

Der Knotenbereich 16 befindet sich im oberen Drittel 24 der Tragstruktur 7.

Da der Knotenbereich 16 einen Eckbereich 25 des Fahrzeugsitzes 1 stabilisiert, ist es vorteilhaft, wenn im Knotenbereich 16 sogleich eine Gurtaufhängung 26 zum Aufnehmen der Gurtumlenkeinrichtung 6 platziert ist.

Vorteilhafter Weise können bei einer Aktivierung des Gurtrückhaltesystems 4, beispielsweise bei einer Vollbremsung oder einem Auffahrunfall, an einem Gurt 27 des Gurtrückhaltesystems 4 auftretende Gurtrückhaltekräfte 28 direkt in die Hauptkräfte-Leiteinrichtung 11 übertragen und unmittelbar weiter in die Karosseriekomponente 8 eingeleitet werden.

Insofern werden andere Bauteile des Fahrzeugsitzes 1 nicht oder weniger stark durch die Gurtrückhaltekräfte 28 belastet, wodurch diese Bauteile weniger massiv gebaut werden können. Hierdurch wird eine weitere Gewichtsreduzierung am Fahrzeugsitz 1 erzielt.

Während die erste Hauptkräftestrebe 19 von dem Knotenbereich 16 zu einem knotenbereichsseitigen vorderen Tragstrukturfuß 41 reicht, verläuft die zweite Hauptkräftestrebe 20 hinter dem Sitzteil 2 von dem Knotenbereich 16 ausgehend, ebenfalls knotenbereichsseitig, runterwärts zu einem ersten hinteren Tragstrukturfuß 42.

Diese zweite Hauptkräftestrebe 20 wirkt insbesondere bei einem Crash als Zugstrebe der Tragstruktur 7.

Die dritte Hauptkräftestrebe 21 ist in Sitzrichtung gesehen quer hinter dem Sitzteil platziert und verläuft ausgehend vom Knotenbereich 16 runterwärts bis auf eine dem Knotenbereich 16 abgewandten Gurtschlossseite 30 des Fahrzeugsitzes 1, wobei sie in einem weiteren hinteren Tragstrukturfuß 45 endet.

Diese dritte Hauptkräftestrebe 21 wirkt insbesondere bei einem Crash als Zug-Druckstrebe der Tragstruktur 7.

Aufgrund der Konstruktion des vorteilhaften Dreibein-Gestells 22 entfällt in diesem Ausführungsbeispiel unterhalb des Sitzteils 2 auf der dem Knotenbereich 16 bzw. der Gurtaufhängung 26 abgewandten Vorderseite 29 des Fahrzeugsitzes 1 auch eine zusätzliche Abstützstrebe, wodurch eine weitere Gewichtsreduzierung erzielt werden kann.

Gemäß der Figur 2 ist das Dreibein-Gestell 22 aus der Figur 1 nochmals in idealisierter Darstellung gezeigt, wobei die erste Hauptkräftestrebe 19 ein Druckstab, die zweite Hauptkräftestrebe 20 ein Zugstab und die dritte Hauptkräftestrebe 21 ein Zug-Druckstab ist, welche in dem Knotenbereich 16 zusammengefasst sind.

Hierbei definiert die erste Hauptkräftestrebe 19 eine erste Hauptkräftewirklinie 12, die zweite Hauptkräftestrebe 20 eine zweite Hauptkräftewirklinie 13 und die dritte Hauptkräftestrebe 21 eine dritte Hauptkräftewirklinie 14 der Hauptkräfte-Leiteinrichtung 11.

Vorteilhafter Weise ist in diesem Knotenbereich 16 zudem die Gurtumlenkeinrichtung 6 an dem Dreibein-Gestell 22 kräfteleitoptimiert befestigt.

Insofern ist mittels des Dreibein-Gestells 22 eine kompakte und gewichtsmäßig leichte Hauptkräfte-Leiteinrichtung 11 für die Tragstruktur 7 des in der Figur 1 gezeigten Fahrzeugsitzes 1 hergestellt.

Die in der Figur 3 gezeigte Tragstruktur 107 eines weiteren Fahrzeugsitzes 101 besteht aus einer Vielzahl an Strukturstreben 140, welche im Wesentlichen ein Sitzteil 102 und eine Rückenlehne (hier nicht eingezeichnet) tragen.

Die einzelnen Strukturstreben 140 sind in diesem Ausführungsbeispiel zum überwiegenden Teil zu einem asymmetrischen Gestell 118 der Tragstruktur 107 miteinander verschweißt und bestehen aus einem Edelstahlmaterial. Das asymmetrische Gestell 118 setzt sich in diesem Ausführungsbeispiel demnach aus Edelstahlrohren zusammen, die miteinander verschweißt sind.

Mittels der Vielzahl an Strukturstreben 140 wird an der Tragstruktur 107 eine Hauptkräfte-Leiteinrichtung 111 mit im Wesentlichen drei Hauptkräftewirklinien 112, 113 und 114 gebildet, wobei die drei Hauptkräftewirklinien 112, 113 und 114 in einem Knotenbereich 116 der Hauptkräfte-Leiteinrichtung 111 zusammen geführt sind.

Der Knotenbereich 116 befindet sich in einem oberen Eckbereich 125 der Tragstruktur 107.

In dem Knotenbereich 116 ist wieder eine Gurtaufhängung 126 vorgesehen, an welcher eine hier nicht gezeigte Gurtumlenkeinrichtung eines Gurtrückhaltesystems befestigbar ist. Auch ist ein Gurtschloss 105 des Gurthaltesystems eingezeichnet.

In diesem Ausführungsbeispiel wird die erste Hauptkräftewirklinie 112 im Wesentlichen von einer ersten Hauptkräftestrebe 119 realisiert, welche von dem Knotenbereich 116 bogenförmig zu einem vorderen Tragstrukturfuß bzw. einer unteren ersten Befestigungsaufnahme 141 spannt.

Eine zweite gebogene Hauptkräftestrebe 120 formuliert die zweite Hauptkräftewirklinie 113, wobei die zweite Hauptkräftestrebe 120 von dem Knotenbereich 116 in Sitzrichtung gebogen bis zu einem ersten hinteren Tragstrukturfuß bzw. einer unteren zweiten Befestigungsaufnahme 142 reicht.

Die dritte Hauptkräftewirklinie 114 wird durch eine kombinierte dritte Hauptkräftestrebe 121 definiert, welche einen gebogenen Oberteil 143 und einen dreiecksförmigen Unterteil 144 umfasst.

Während der gebogene Oberteil 143 bis in den Knotenbereich 116 reicht, erstreckt sich der dreiecksförmige Unterteil 144 bis in einen weiteren hinteren Tragstrukturfuß bzw. eine dritte Befestigungsaufnahme 145.

Eine rückseitige Vertikalstrebe 144A des dreiecksförmigen Unterteils 144 erstreckt sich hochwärts, entgegen der Sitzrichtung bauchig gebogen, bis in den oberseitig 115 der Tragstruktur 107 hinein. Dort geht sie in eine horizontal verlaufende Strukturebene 146 über, die quer zur Sitzrichtung angeordnet ist. Knotenbereichsseitig biegt die horizontal verlaufende Strukturstrebe 146 in eine runterwärts gerichtete Strukturstrebe 147, die an dem Knotenbereich 116 in die zweite Hauptkräftestrebe 120 übergeht. Hierdurch ist rückseitig der Tragstruktur 107 eine außerordentlich gute Abstützung des Fahrzeugsitzes 101 gewährleistet.

Darüber hinaus weist der dreiecksförmige Unterteil 144 zur weiteren Stabilisierung eine vorderseitige Vertikalstrebe 144B auf, die von dem weiteren hinteren Tragstrukturfuß 145 hochwärts nach vorne ausgerichtet angeordnet ist und insbesondere eine gebogene Horizontalstrebe 144C der Dreiecks-Anordnung 144 trägt.

Da die Horizontalstrebe 144C auch von der rückseitigen Vertikalstrebe 144A getragen wird, baut auch eine Gurtschlossseite 130 des Fahrzeugsitzes 101 sehr stabil und dennoch leicht.

Der gebogene Oberteil 143 der Hauptkräftestrebe 121 stützt sich so vorteilhaft auf der Horizontalstrebe 144C des dreiecksförmigen Unterteils 144 ab, welche wiederum von der rückseitigen Vertikalstrebe 144A als auch von der vorderseitigen Vertikalstrebe 144B getragen wird.

Die Horizontalstrebe 144C erstreckt sich vorteilhafter Weise zudem von der rückseitigen Vertikalstrebe 144A bis zu einem weiteren vorderen Tragstrukturfuß 148 und stützt hierbei sogleich noch eine vertikale Stützstrebe 131 einer Sitzteilaufhängungsstrebe 132 der Tragstruktur 107 ab, welche oberseitig 115 an der rückseitigen Vertikalstrebe 144A befestigt ist und ebenfalls in dem weiteren vorderen Tragstrukturfuß 148 endet.

Von der Sitzteilaufhängungsstrebe 132 hochwärts erstreckt sich noch eine Kreuzstrebe 133 zur weiteren Abstützung eines Sitzteilrahmens 134, der in einem Knotenpunkt 135 gemeinsam mit der vorderseitigen Vertikalstrebe 144B an der Sitzteilaufhängungsstrebe 132 zusammentrifft.

Weiter hinten sind die zweite Hauptkräftestrebe 120 und die rückseitige Vertikalstrebe 144A stabilisierend noch durch eine untere Querverbindungsstrebe 136 miteinander verbunden.

Von dieser Querverbindungsstrebe 136 endseitig abgehend verlaufen noch Horizontalverbindungsstreben 137, die vorzugsweise als weitere Kreuzstrebe ausgestaltet sind, einerseits startend (hier verdeckt von dem Sitzteil 102) von der zweiten Hauptkräftestrebe 120 zu dem Sitzteilrahmen 134 und anderseits startend von der rückseitigen Vertikalstrebe 144A zu dem Sitzteilrahmen 134.

Die hier nicht gezeigte Rückenlehne wird mittels einer Ovalstrebe 138 und eine her ebenfalls nicht gezeigte Kopfstütze wird mittels einer u-förmigen Strebenanordnung 139 an der Tragstruktur 107 gehalten.

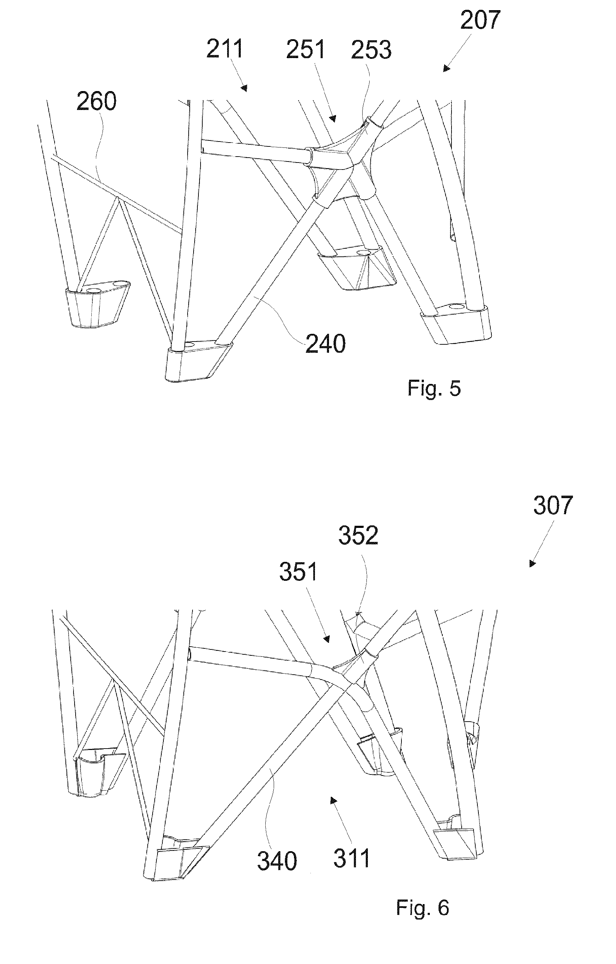

Es versteht sich, dass die hier beschriebene Tragstruktur 107 im Bedarfsfall noch durch weitere Strukturstreben 140 ergänzt sein kann, wie dies beispielhaft noch hinsichtlich einer weiteren Tragstruktur gemäß der Figur 5 gezeigt ist.

Der weitere vordere Tragstrukturfuß bzw. die weitere, vierte Befestigungsaufnahme 148 liegt nicht auf einer der Hauptkräftewirklinien 112, 113 bzw. 114. Insofern spielt diese nur eine untergeordnete Rolle bei der Abstützung des Fahrzeugsitzes 101 gegenüber einer hier nicht gezeigten Karosseriekomponente.

Vielmehr wird die Hauptkräfte-Leiteinrichtung 111 im Wesentlichen durch ein Dreibein-Gestell 122 verkörpert, welches durch weitere Strukturstreben 140 der Tragstruktur 107 ergänzt ist.

Die in der Figur 4 gezeigte Verbindungseinrichtung 150 für Strukturstreben (siehe beispielsweise Ziffern 19, 20, 22, Figur 1 oder Ziffer 140, Figur 3) stellt neben einer Schweißkonstruktion eine erste Alternative dar, einzelne Strukturstreben zu einer Tragstruktur zusammenzufügen.

Hierzu weist die Verbindungseinrichtung 150 einen Knotenfitting 151 mit vier Aufnahmen 152 (hier nur exemplarisch beziffert) auf. Der Knotenfitting 151 ist mit Knotenblechen 153 (hier nur exemplarisch beziffert) verstärkt, so dass die einzelnen Aufnahmen 152 sehr stabil zueinander stehen.

Jeder der Aufnahmen 152 umfasst einen Innenraum 154, in welche die einzelnen Strukturstreben endseitig eingesteckt werden können.

In die Innenräume 154 ragt jeweils ein stehender Verbindungsdorn 155 hinein, so dass sich in jeder der Aufnahmen 152 ein Ringspalt 156 bzw. ein Ringzylinder ergibt, in welchem ein Rohr einer Strukturstrebe eingesteckt werden kann. Hierdurch kann eine besonders innige Verbindung zwischen dem Knotenfitting 151 und den Strukturstreben erreicht werden.

Bei der in der Figur 5 gezeigten eine Hauptkräfte-Leiteinrichtung 211 bildende Tragstruktur 207 sind einzelne Strukturstreben 240 mit einem solchen Knotenfitting 251 miteinander verklebt. Auch hier besitzt der Knotenfitting 251 vier Aufnahmen 253 zum Einstecken von Strukturstreben 240. Die Strukturstreben 240 weisen hierbei noch kleinere Verstrebungshilfen 260, wie sie an allen vorliegenden Tragstrukturen zum Einsatz kommen können.

Eine weitere Variante eines derartigen Knotenfittings 351 verbindet Strukturstreben 340 einer in der Figur 6 gezeigten weiteren Tragstruktur 307 mit einer Hauptkräfte-Leiteinrichtung 311. Der Knotenfitting 351 verfügt über lediglich drei Strukturstrebenaufnahmen 352.

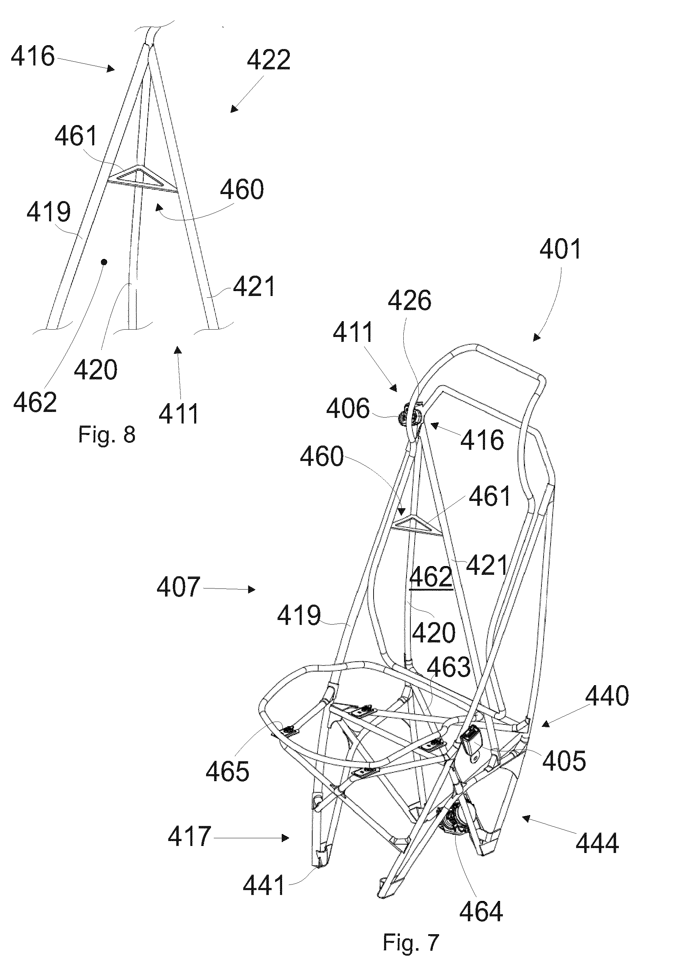

Die in der Figur 7 gezeigte Tragstruktur 407 eines weiteren Fahrzeugsitzes 401 ähnelt im Aufbau insbesondere der Tragstruktur 107 des Fahrzeugsitzes 101 aus der Figur 3, so dass der Übersichtlichkeit halber nicht alle Komponenten erneut beziffert bzw. nochmals erläutert sind, um so auch Wiederholungen zu vermeiden.

Insofern verfügt der Fahrzeugsitz 401 über ein aus Edelstahlrohren gefertigtes asymmetrisches Gestell 418, welches eine als Dreibein-Gestell 422 ausgeprägte Hauptkräfte-Leiteinrichtung 411 umfasst.

Dementsprechend weist das asymmetrische Gestell 418 eine erste Hauptkräftestrebe 419, eine zweite Hauptkräftestrebe 420 und eine dritte Hauptkräfteebene 421 auf, die oberseitig 415 des Fahrzeugsitzes 401 in einem Knotenbereich 416 zusammenstoßen und miteinander verbunden sind.

Unterseitig 417 des Fahrzeugsitzes 401 laufen die Hauptkräftestreben 419, 420 und 421 weiter auseinander und sind mittels einer Vielzahl an weiteren Strukturstreben 440 der Tragstruktur 407 zumindest teilweise indirekt untereinander verbunden.

Im Gegensatz zu den vorher beschriebenen Ausführungsbeispielen ist zwischen den Hauptkräftestreben 419, 420 und 421 zusätzlich eine Dreiecksverbindung 460 etabliert, so dass die einzelnen Hauptkräftestreben 419, 420, 421 unmittelbar unterhalb des Knotenbereichs 416 nochmal zusätzlich direkt miteinander wirkverbunden sind. Vorteilhafter Weise wird hierdurch eine insbesondere bei einem Crash auftretende Druckbelastung der ersten, vorderen Hauptkräftestrebe 419 reduziert, da diesbezügliche Kräfte zumindest teilweise auf die beiden weiteren, hinteren Hauptkräftestreben 420 und 421 aufgeteilt werden.

Hierdurch kann die erste Hauptkräftestrebe 419 konstruktiv nochmals leichter ausgelegt werden, da sie durch die anderen Hauptkräftestreben 420, 421 entlastet wird. Vorteilhafter Weise kann hierdurch eine weitere Gewichtsreduzierung an dem Fahrzeugsitz 401 erzielt werden.

Darüber hinaus hat die Dreiecksverbindung 460 eine Verkürzung des Druckstabs, der durch die erste Hauptkräftestrebe 419 verkörpert wird, des Dreibein-Gestells 422 zur Folge, so dass die Gefahr eines Ausknickens der ersten Hauptkräftestrebe 419 nochmals reduziert werden kann. Insofern baut die Tragstruktur 407 nochmals stabiler und ist im Falle eines Fahrzeugcrashs nochmals sicherer.

Die Dreiecksverbindung 460 ist hierbei vorteilhafter Weise oberhalb eines Sitzteilrahmens 434 und insbesondere in einem Bereich 461 hinter einer hier nicht gezeigten Rückenlehne des Fahrzeugsitzes 401 platziert. So kann die Länge, gemessen von einer ersten Befestigungsaufnahme 441 der Tragstruktur 407, des ausknickgefährdeten Bereichs der ersten Hauptkräftestrebe 419 wirkungsvoll reduziert werden.

Die Dreiecksverbindung 460 ist in diesem Ausführungsbeispiel durch einen Dreiecksblechrahmen 461 realisiert, der in einem von den drei Hauptkräftestreben 419, 420 und 421 gebildeten Raumvolumen 462 angeordnet ist. Der Dreiecksblechrahmen 461 ist an jedem der drei Hauptkräftestreben 419, 420, 421 verschweißt.

Darüber hinaus ist die Tragstruktur 407 ähnlich verstrebt wie die Tragstruktur 107 aus der Figur 3, wobei hier zusätzlich noch eine hintere quer zwischen der zweiten Hauptstrukturstrebe 420 und einem Unterteil 444 der dritten Hauptstrukturstrebe 421 verlaufende Verbindungstrebe 463 vorgesehen ist, an welcher vorteilhafter Weise sogleich ein Gurtmagazin 464 eines Gurtrückhaltesystems 404 befestigt ist.

Somit können auf das Gurtmagazin 464 einwirkende Rückhaltekräfte besonders günstig in die Tragstruktur 407 und nahe einer Tragstrukturbefestigung eingeleitet werden. Letzteres bewirkt vorteilhafter Weise geringe Drehmomente, die von der Tragstruktur 407 aufgenommen werden müssen, beispielsweise bei einem Fahrzeugcrash. Hierdurch wird die Tragstruktur 407 weniger stark belastet und sie kann gewichtmäßig leichter gebaut werden. Insofern ist eine in der Tragstruktur 407 vorgesehene tiefe Befestigung des Gurtmagazins 464 auch ohne die übrigen Merkmale der Erfindung vorteilhaft.

Das Gurtrückhaltesystem 404 ist in diesem Ausführungsbeispiel noch durch ein Gurtschloss 405 und eine Gurtumlenkeinrichtung 406 visualisiert, wobei letztere an einer Gurtaufhängung 426 der Tragstruktur 407 aufgehängt ist. Somit ist das Gurtrückhaltesystem 404 auch bei diesem Ausführungsbeispiel vollständig in den Fahrzeugsitz 401 integriert.

Auch erkennt man in dem Ausführungsbeispiel noch vier Sitzteilbefestigungen 465 (nur exemplarisch beziffert) zum Befestigen eines hier nicht gezeigten Sitzteils des Fahrzeugsitzes 401 an der Tragstruktur 407.

Es versteht sich, dass es sich bei den vorstehend erläuterten Ausführungsbeispielen lediglich um erste Ausgestaltungen der Erfindung handelt. Insofern beschränkt sich die Ausgestaltung der Erfindung nicht auf diese Ausführungsbeispiele.

### Bezugszeichenliste

- 1: Fahrzeugsitz
- 2: Sitzteil
- 3: Rückenlehne
- 4: Gurtrückhaltesystem
- 5: Gurtschloss
- 6: Gurtumlenkeinrichtung
- 7: Tragstruktur
- 8: Karosseriekomponente
- 9: Kabinenboden
- 10: Blechkleid
- 11: Hauptkräfte-Leiteinrichtung
- 12: erste Hauptkräftewirklinie
- 13: zweite Hauptkräftewirklinie
- 14: dritte Hauptkräftewirklinie
- 15: oberseitig
- 16: Knotenbereich
- 17: unterseitig
- 18: asymmetrisches Gestell
- 19: erste Hauptkräftestrebe
- 20: zweite Hauptkräftestrebe
- 21: dritte Hauptkräftestrebe
- 22: Dreibein-Gestell
- 23: Sitzbereich
- 24: oberes Drittel
- 25: Eckbereich
- 26: Gurtaufhängung
- 27: Gurt
- 28: Gurtrückhaltekräfte
- 29: abgewandte Vorderseite
- 30: Gurtschlossseite
- 41: vorderer Tragstrukturfuß
- 42: hinterer Tragstrukturfuß
- 45: weiterer hinterer Tragstrukturfuß
- 101: Fahrzeugsitz
- 102: Sitzteil
- 105: Gurtschloss
- 107: Tragstruktur
- 111: Hauptkräfte-Leiteinrichtung
- 112: erste Hauptkräftewirklinie
- 113: zweite Hauptkräftewirklinie
- 114: dritte Hauptkräftewirklinie
- 115: oberseitig
- 116: Knotenbereich
- 118: asymmetrisches Gestell
- 119: erste Hauptkräftestrebe
- 120: zweite Hauptkräftestrebe
- 121: dritte Hauptkräftestrebe
- 122: Dreibein-Gestell
- 125: Eckbereich
- 126: Gurtaufhängung
- 130: Gurtschlossseite
- 131: vertikale Stützstrebe
- 132: Sitzteilaufhängungsstrebe
- 133: Kreuzstrebe
- 134: Sitzteilrahmen
- 135: Knotenpunkt
- 136: Querverbindungsstrebe
- 137: Horizontalverbindungsstreben
- 138: Ovalstrebe
- 139: Strebenanordnung
- 140: Strukturstreben
- 141: erste Befestigungsaufnahme
- 142: zweite Befestigungsaufnahme
- 143: Oberteil
- 144: Unterteil
- 144A: rückseitige Vertikalstrebe
- 144B: vorderseitige Vertikalstrebe
- 144C: Horizontalstrebe
- 145: dritte Befestigungsaufnahme
- 146: horizontale Strukturebene
- 147: Strukturstrebe
- 148: vierte Befestigungsaufnahme
- 150: Verbindungseinrichtung
- 151: Knotenfitting
- 152: Aufnahmen
- 153: Knotenbleche
- 154: Innenraum
- 155: Verbindungsdorn
- 156: Ringspalt
- 207: Tragstruktur
- 211: Hauptkräfte-Leiteinrichtung
- 240: Strukturstreben
- 251: Knotenfitting
- 252: Aufnahmen
- 260: Verstrebungshilfen
- 307: Tragstruktur
- 311: Hauptkräfte-Leiteinrichtung
- 340: Strukturstreben
- 351: Knotenfitting
- 352: Aufnahmen
- 401: Fahrzeugsitz
- 405: Gurtschloss
- 406: Gurtumlenkeinrichtung
- 407: Tragstruktur
- 411: Hauptkräfte-Leiteinrichtung
- 415: oberseitig
- 416: Knotenbereich
- 418: asymmetrisches Gestell
- 419: erste Hauptkräftestrebe
- 420: zweite Hauptkräftestrebe
- 421: dritte Hauptkräftestrebe
- 422: Dreibein-Gestell
- 426: Gurtaufhängung
- 444: Unterteil
- 460: Dreiecksverbindung
- 461: Dreiecksblechrahmen
- 462: Raumvolumen
- 463: Verbindungstrebe464 Gurtmagazin
- 465: Sitzteilbefestigungen

## Patentansprüche

1. Fahrzeugsitz (1; 101) mit einem Sitzteil (2; 102), mit einer Rückenlehne (3) und mit einer Tragstruktur (7; 107) zum Tragen des Sitzteils (2; 102) sowie der Rückenlehne (3), bei welchem die Tragstruktur (7; 107) an einer Karosseriekomponente (8) befestigbar ist und bei welchem mittels der Tragstruktur (7; 107) auf den Fahrzeugsitz (1; 101) einwirkende Kräfte in die Karosseriekomponente (8) einleitbar sind,
**dadurch gekennzeichnet, dass**
die Tragstruktur (7; 107) ein asymmetrisches Gestell (18; 118) mit im Wesentlichen vertikal verlaufenden Hauptkräftestreben (19, 20, 21; 119, 120, 121) aufweist, bei welchem die Hauptkräftestreben (19, 20, 21; 119, 120, 121) oberseitig (15; 115) der Tragstruktur (7; 107) in dem Knotenbereich (16; 116) zusammengeführt und unterseitig (17) der Tragstruktur (7; 107) eine erste (19; 119) der Hauptkräftestreben (19, 20, 21; 119, 120, 121) knotenbereichsseitig als Druckstrebe nach vorne bis zu einem vorderen Tragstrukturfuß (41; 141), eine zweite (20; 120) der Hauptkräftestreben (19, 20, 21; 119, 120, 121) als Zugstrebe knotenbereichsseitig hinten bis zu einem ersten hinteren Tragstrukturfuß (42; 142) und eine dritte (21; 121) der Hauptkräftestreben (19, 20, 21; 119, 120, 121) als Zug-Druckstrebe hinten bis zu einem weiteren hinteren Tragstrukturfuß (45; 145) geführt angeordnet sind.

2. Fahrzeugsitz (1; 101) nach Anspruch 1,
**dadurch gekennzeichnet, dass**
die erste Hauptkräftestrebe (19; 119), insbesondere oberhalb des Sitzteils (2; 102), bis vor die Rückenlehne (3; 103) reichend angeordnet ist und seitlich an oder neben dem Sitzteil (2; 102) angeordnet ist.

3. Fahrzeugsitz (1; 101) nach Anspruch 1 oder 2,
**dadurch gekennzeichnet, dass**
die erste Hauptkräftestrebe (19; 119) gebogen und in Sitzrichtung bauchig ausgestaltet ist.

4. Fahrzeugsitz (1; 101) nach einem der Ansprüche 1 bis 3,
**dadurch gekennzeichnet, dass**
die zweite Hauptkräftestrebe (20; 120) hinter dem Sitzteil (2; 102) angeordnet ist und in Sitzrichtung bauchig ausgestaltet ist.

5. Fahrzeugsitz (1; 101) nach einem der Ansprüche 1 bis 4,
**dadurch gekennzeichnet, dass**
die dritte Hauptkräftestrebe (21; 121) in Sitzrichtung gesehen quer hinter dem Sitzteil (2; 102) angeordnet ist.

6. Fahrzeugsitz (1; 101) nach einem der Ansprüche 1 bis 5,
**dadurch gekennzeichnet, dass**
die dritte Hauptkräftestrebe (21; 121) tragstrukturfußseitig an einer Dreiecks-Anordnung (144) aus weiteren Tragstrukturstreben (144A, 144B, 144C) abgestützt angeordnet ist.

7. Fahrzeugsitz (1; 101) nach Anspruch 6,
**dadurch gekennzeichnet, dass**
eine rückseitige Vertikalstrebe (144A) der Dreiecks-Anordnung (144) sich von dem weiteren hinteren Tragstrukturfuß (45; 145) bis zu dem Knotenbereich (16; 116) erstreckt und dort insbesondere in die zweite Hauptkräftestrebe (20; 120) übergeht.

8. Fahrzeugsitz (1; 101) nach Anspruch 6 oder 7,
**dadurch gekennzeichnet, dass**
eine vorderseitige Vertikalstrebe (144B) der Dreiecks-Anordnung (144) von dem weiteren hinteren Tragstrukturfuß (45; 145) hochwärts nach vorne ausgerichtet angeordnet ist und insbesondere eine Horizontalstrebe (144C) der Dreiecks-Anordnung (144) trägt.

9. Fahrzeugsitz (1; 101) nach einem der Ansprüche 6 bis 8,
**dadurch gekennzeichnet, dass**
eine Horizontalstrebe (144C) der Dreiecks-Anordnung (144) sich von einer rückseitigen Vertikalstrebe (144A) der Dreiecks-Anordnung (144) bis zu dem weiteren vorderen Tragstrukturfuß (148) der Tragstruktur (7; 107) erstreckt.

10. Fahrzeugsitz (1; 101) nach einem der Ansprüche 1 bis 9,
**dadurch gekennzeichnet, dass**
der Knotenbereich (16; 116) eine Halteeinrichtung für eine Gurtaufhängung (26; 126) umfasst.

## Claims

1. Vehicle seat (1; 101) with a seat part (2; 102), a backrest (3), and a supporting structure (7; 107) for supporting the seat part (2; 102) and the backrest (3), in which the supporting structure (7; 107) can be fastened to a body component (8) and in which forces acting on the vehicle seat (1; 101) can be introduced into the body component (8) by means of the supporting structure (7; 107),
**characterised in that**
the supporting structure (7; 107) comprises an asymmetrical frame (18; 118) having main strengthening struts that extend substantially vertically (19, 20, 21; 119, 120, 121), in which frame the main strengthening struts (19, 20, 21; 119, 120, 121) are brought together in the junction region (16; 116) on the upper side (15; 115) of the supporting structure (7; 107) and,
on the lower side (17) of the supporting structure (7; 107), a first (19; 119) of the main strengthening struts (19, 20, 21; 119, 120, 121) is arranged on the junction region side as a compression strut and is guided towards the front as far as a front supporting structure foot (41; 141), a second (20; 120) of the main strengthening struts (19, 20, 21; 119, 120, 121) is arranged on the junction region side as a tension strut and is guided towards the rear as far as a first rear supporting structure foot (42; 142), and a third (21; 121) of the main strengthening struts (19, 20, 21; 119, 120, 121) is arranged as a tension-compression strut guided towards the rear as far as a further rear supporting structure foot (45; 145).

2. Vehicle seat (1; 101) according to claim 1,
**characterised in that**
the first main strengthening strut (19; 119), in particular above the seat part (2; 102), is arranged so that it extends up to the backrest (3; 103) and is arranged laterally on or next to the seat part (2; 102).

3. Vehicle seat (1; 101) according to either claim 1 or claim 2,
**characterised in that**
the first main strengthening strut (19; 119) is curved and bulge-shaped in the sitting direction.

4. Vehicle seat (1; 101) according to any of claims 1 to 3,
**characterised in that**
the second main strengthening strut (20; 120) is arranged behind the seat part (2; 102) and is bulge-shaped in the sitting direction.

5. Vehicle seat (1; 101) according to any of claims 1 to 4,
**characterised in that**
the third main strengthening strut (21; 121) is arranged transversely behind the seat part (2; 102) when viewed in the sitting direction.

6. Vehicle seat (1; 101) according to any of claims 1 to 5,
**characterised in that**
the third main strengthening strut (21; 121) is arranged so as to be supported, on the supporting structure foot side, on a triangular arrangement (144) made of further supporting structure struts (144A, 144B, 144C).

7. Vehicle seat (1; 101) according to claim 6,
**characterised in that**
a vertical strut (144A) at the back of the triangular arrangement (144) extends from the further rear supporting structure foot (45; 145) as far as the junction region (16; 116) and there in particular transitions into the second main strengthening strut (20; 120).

8. Vehicle seat (1; 101) according to either claim 6 or claim 7,
**characterised in that**
a vertical strut (144B) at the front of the triangular arrangement (144) is arranged so as to be oriented upwards towards the front from the further rear supporting structure foot (45; 145) and in particular supports a horizontal strut (144C) of the triangular arrangement (144).

9. Vehicle seat (1; 101) according to any of claims 6 to 8,
**characterised in that**
a horizontal strut (144C) of the triangular arrangement (144) extends from a vertical strut (144A) at the back of the triangular arrangement (144) as far as the further front supporting structure foot (148) of the supporting structure (7; 107).

10. Vehicle seat (1; 101) according to any of claims 1 to 9,
**characterised in that**
the junction region (16; 116) comprises a retaining device for a seatbelt mount (26; 126).

## Revendications

1. Siège de véhicule (1 ; 101) doté d'une partie d'assise (2 ; 102) et d'une structure porteuse (7 ; 107) pour le support de la partie d'assise (2 ; 102) et du dossier (3), dans lequel la structure porteuse (7 ; 107) peut être fixée à un composant de carrosserie (8) et dans lequel la structure porteuse (7, 107) permet de transmettre les forces exercées sur le siège du véhicule (1 ; 101) au composant de carrosserie (8), **caractérisé en ce que** la structure porteuse (7 ; 107) comprend un châssis asymétrique (18 ; 118) avec des nervures de renfort principales (19, 20, 21 ; 119, 120, 121) s'étendant essentiellement verticalement, dans lequel les nervures de renfort principales (19, 20, 21 ; 119, 120, 121) sont regroupées sur le côté supérieur (15 ; 115) de la structure porteuse (7 ; 107) dans la zone nodale (16 ; 116) et, sur le côté inférieur (17) de la structure porteuse (7 ; 107), sont disposées, de manière guidée, une première (19 ; 119) des nervures de renfort principales (19, 20, 21 ; 119, 120, 121), sur le côté de la zone nodale, en tant que nervure de pression, vers l'avant jusqu'à un pied avant de la structure porteuse (41 ; 141), une deuxième (20 ; 120) des nervures de renfort principales (19, 20, 21 ; 119, 120, 121), en tant que nervure de traction, sur le côté de la zone nodale derrière jusqu'à un premier pied arrière de la structure porteuse (42 ; 142) et une troisième (21 ; 121) des nervures de renfort principales (19, 20, 21 ; 119, 120, 121), en tant que nervure de traction-pression, à l'arrière jusqu'à un autre pied arrière de la structure porteuse (45 ; 145).

2. Siège de véhicule (1 ; 101) selon la revendication 1, **caractérisé en ce que** la première nervure de renfort principale (19 ; 119) est disposée, plus particulièrement, au-dessus de la partie d'assise (2 ; 102), jusque devant le dossier (3 ; 103) et est disposée latéralement au niveau ou à proximité de la partie d'assise (2 ; 102).

3. Siège de véhicule (1 ; 101) selon la revendication 1 ou 2, **caractérisé en ce que** la première nervure de renfort principale (19 ; 119) est pliée et est conçue de manière bombée dans la direction d'assise.

4. Siège de véhicule (1 ; 101) selon l'une des revendications 1 à 3, **caractérisé en ce que** la deuxième nervure de renfort principale (20 ; 120) se trouve derrière la partie d'assise (2 ; 102) et est conçue de manière bombée dans la direction d'assise.

5. Siège de véhicule (1 ; 101) selon l'une des revendications 1 à 4, **caractérisé en ce que** la troisième nervure de renfort principale (21 ; 121) est disposée, vue dans la direction d'assise, transversalement derrière la partie d'assise (2 ; 102).

6. Siège de véhicule (1 ; 101) selon l'une des revendications 1 à 5, **caractérisé en ce que** la troisième nervure de renfort principale (21 ; 121) est disposée de façon à s'appuyer, sur le côté du pied de la structure porteuse, contre un dispositif triangulaire (144) constitué de nervures de structure porteuse (144A, 144B, 144C) supplémentaires.

7. Siège de véhicule (1 ; 101) selon la revendication 6, **caractérisé en ce que** la nervure verticale arrière (144A) du dispositif triangulaire (144) s'étend du pied arrière supplémentaire de la structure porteuse (45 ; 145) jusqu'à la zone nodale (16 ; 116) et y effectue, plus particulièrement, une transition avec la deuxième nervure de renfort principale (20 ; 120).

8. Siège de véhicule (1 ; 101) selon la revendication 6 ou 7, **caractérisé en ce qu'**une nervure verticale avant (144B) du dispositif triangulaire (144) est disposée de façon à être orientée vers le haut et vers l'avant à partir du pied arrière supplémentaire de la structure porteuse (45 ; 145) et supporte, plus particulièrement, une nervure horizontale (144C) du dispositif triangulaire (144).

9. Siège de véhicule (1 ; 101) selon l'une des revendications 6 à 8, **caractérisé en ce qu'**une nervure horizontale (144C) du dispositif triangulaire (144) s'étend d'une nervure verticale arrière (144A) du dispositif triangulaire (144) jusqu'à un pied avant supplémentaire (148) de la structure porteuse (7 ; 107).

10. Siège de véhicule (1 ; 101) selon l'une des revendications 1 à 9, **caractérisé en ce que** la zone nodale (16 ; 116) comprend un dispositif de maintien pour une suspension de ceinture (26 ; 126).
